# EUROPÄISCHE PATENTANMELDUNG

(11) **EP 3 945 616 A1**
(43) Veröffentlichungstag der Anmeldung: **02.02.2022**
(21) Anmeldenummer: 20187811.3
(22) Anmeldetag: 27.07.2020
(51) Int. Cl.: H01M 10/04, H01M 10/48, H01M 50/10, H01M 50/20, H01M 50/50, H01M 50/572

(54) **AKKUPACK**

(71) Anmelder: Hilti Aktiengesellschaft, 9494 Schaan (LI)
(72) Erfinder: Ender, Moses, 9470 Buchs (CH); Lepiorz, Matthias, 09112 Chemnitz (DE); Hauser, Klaus, 86830 Schwabmünchen (DE); Martiny, Nora, 82211 Herrsching-Breitbrunn (DE); Stanger, Robert, 87600 Kaufbeuren (DE); Ziegler, Bernd, 86830 Schabmünchen (DE); Sax, Kathrin, 86937 Scheuring (DE)
(74) Vertreter: Hilti Aktiengesellschaft Corporate Intellectual Property

(57) **Zusammenfassung**

Akkupack der zur wiederlösbaren Aufnahme in einer Aufnahmebucht einer elektrischen Handwerkzeugmaschine und/oder eine Ladestation ausgebildet ist, wobei der Akkupack wenigstens eine Akkuzelle aufweist, die innerhalb eines Gehäuses des Akkupacks angeordnet ist, wobei der Akkupack eine mechanische Verriegelung mit einer Freigabestellung und einer Sperrstellung aufweist, wobei die mechanische Verriegelung ausgebildet ist in Sperrstellung die Aufnahme des Akkupacks in der Aufnahmebucht zu verhindern, und wobei die mechanische Verriegelung durch eine Volumenzunahme der Akkuzelle ausgelöst wird.

## Beschreibung

Die vorliegende Erfindung betrifft ein Akkupack das zur wiederlösbaren Aufnahme in einer Aufnahmebucht einer elektrischen Handwerkzeugmaschine und/oder einer Ladestation ausgebildet ist. Der Akkupack weist wenigsten wenigstens eine Akkuzelle auf, die innerhalb eines Gehäuses des Akkupacks angeordnet ist. Solche Akkupacks sind grundsätzlich aus dem Stand der Technik bekannt. Ebenfalls aus dem Stand der Technik bekannt ist das Phänomen des sogenannten Swellings, auch Ausdehnen oder Aufblähen genannt. Dies ist problematisch, da es zu einem Aufplatzen einer Außenhülle der Akkuzelle führen kann. Dadurch kann wiederum der Akkupack selbst oder dessen Elektronik beschädigt werden, was zu einer Gefahr für den Benutzer führen kann.

Die europäische Patentanmeldung EP 3 591 739 A1 beschreibt ein Akkupack mit einer Pouchzelle, wobei der Akkupack wenigstens einen Stromunterbrecher aufweist, der ausgebildet ist eine Stromentnahme aus der Pouchzelle zumindest zeitweise zu unterbrechen, wobei der Stromunterbrecher durch ein Aufblähen der Pouchzelle ausgelöst wird.

Es ist Aufgabe der vorliegenden Erfindung einen alternativ ausgestalteten Akkupack zu schaffen, der die Grundlage für eine erhöhte Betriebssicherheit bietet.

Die Aufgabe wird dadurch gelöst, dass der Akkupack eine mechanische Verriegelung mit einer Freigabestellung und einer Sperrstellung aufweist, wobei die mechanische Verriegelung ausgebildet ist in Sperrstellung die Aufnahme des Akkupacks in der Aufnahmebucht zu verhindern, und wobei die mechanische Verriegelung durch eine Volumenzunahme der Akkuzelle ausgelöst wird.

Die Erfindung schließt die Erkenntnis ein, dass ein defektes Akkupack des Standes der Technik - bei dem beispielsweise ein elektrischer Stromunterbrecher vorgesehen ist - typischerweise lediglich durch eine fehlende Funktion der elektrischen Handwerkzeugmaschine erkennbar ist. Der erfindungsgemäße Akkupack hingegen weist eine mechanische Verriegelung auf, so dass ein defektes Akkupack "haptisch" dadurch erkennbar wird, dass es nicht mehr in die Aufnahmebucht einer elektrischen Handwerkzeugmaschine und/oder einer Ladestation eingebracht werden kann. Der Vorteil der vorliegenden Erfindung liegt insbesondere darin, dass die mechanische Verriegelung selbst nicht mit elektrischer Energie versorgt werden muss. Die mechanische Verriegelung funktioniert demnach auch dann, wenn eine etwaige Elektronik des Akkupacks beschädigt oder aus anderen Gründen inaktiv ist.

In einer besonders bevorzugten Ausgestaltung weist das Gehäuse eine mechanische Schnittstelle auf über welche eine Aufnahme des Akkupacks in der Aufnahmebucht erfolgen kann. Es hat sich als vorteilhaft herausgestellt, wenn die mechanische Verriegelung an der mechanischen Schnittstelle angeordnet ist. In einer besonders bevorzugten Ausgestaltung ist die mechanische Schnittstelle als Anschlussschiene ausgebildet. Vorteilhafterweise kann der Akkupack mittels der Anschlussschiene auf eine mit der Anschlussschiene korrespondierende Aufnahmeeinheit, die in der Aufnahmebucht der elektrischen Handwerkzeugmaschine und/oder der Ladestation angeordnet ist, aufgeschoben werden.

In einer weiteren bevorzugten Ausgestaltung weist die mechanische Verriegelung einen Riegel auf. Es hat sich als vorteilhaft herausgestellt, wenn der Riegel durch ein Federelement der mechanischen Verriegelung in die Freigabestellung vorgespannt ist. In einer weiteren bevorzugten Ausgestaltung ist das Federelement derart angeordnet, dass eine Vorspannung des Federelements durch die expandierende Akkuzelle überwunden werden kann. Es hat sich als vorteilhaft herausgestellt, wenn der Riegel an der Anschlussschiene des Akkupacks angeordnet ist. In einer besonders bevorzugten Ausgestaltung ist die Schiene, wenn die mechanische Verriegelung in der Sperrstellung befindlich ist, unmittelbar durch den Riegel gesperrt. Alternativ oder zusätzlich kann der Riegel oder ein Zusatzriegel von der Anschlussschiene des Akkupacks beabstandet angeordnet sein.

Es hat sich als vorteilhaft herausgestellt, wenn die mechanische Verriegelung ein mechanisches Anzeigeelement aufweist. Das Anzeigeelement kann einem Benutzer die Fehlfunktion des Akkupacks (aufgeschwollene Akkuzelle) signalisieren. In einer besonders bevorzugten Ausgestaltung ist das Anzeigeelement in Form eines eingefärbten Materialabschnitts bereitgestellt. In einer weiteren besonders bevorzugten Ausgestaltung ist das Anzeigeelement am Riegel der mechanischen Verriegelung in Form eines verschieden zum Riegel eingefärbten Materialabschnitts des Riegels bereitgestellt. So kann der Riegel beispielsweise einen schwarz eingefärbten Kunststoff aufweisen, wobei das integral mit dem Riegel ausgebildete Anzeigeelement in Form eines rot eingefärbten Kunststoffabschnitts bereitgestellt sein kann.

In einer weiteren bevorzugten Ausgestaltung weist der Akkupack eine Rastsperre auf, die ausgebildet ist, ein manuelles Betätigen der mechanischen Verriegelung aus der Sperrstellung in die Freigabestellung zu verhindern. Die Rastsperre hat den Vorteil, dass eine ungewolltes "Inkraftsetzung" des defekten Akkupacks verhindert oder zumindest deutlich erschwert wird.

In einer weiteren bevorzugten Ausgestaltung weist der Akkupack ein Rastverzögerungselement auf, das ausgebildet ist die mechanische Verriegelung, bei expandierter Akkuzelle, bis zur Entnahme des Akkupacks aus der Aufnahmebucht in Freigabestellung zu halten. Auf diese Art und Weise wird ermöglicht, dass ein defekter Akkupack noch aus der Aufnahmebucht entnommen der elektrischen Handwerkzeugmaschine werden kann, bevor die mechanische Verriegelung wirksam in Sperrstellung springt.

Es hat sich als vorteilhaft herausgestellt, wenn die mechanische Verriegelung verschieden von einem etwaig am Akkupack vorgesehenen manuellen Verriegelungsmechanismus ist. In einer weiteren bevorzugten Ausgestaltung weist der Akkupack zusätzlich zu der mechanischen Verriegelung, die vorzugsweise nicht durch einen Benutzer manuell betätigbar ist, einen manuellen Verriegelungsmechanismus auf, der insbesondere verhindert, dass der Akkupack unerwünscht aus der Aufnahmebucht der elektrischen Handwerkzeugmaschine und/oder der Ladestation herausrutschen kann.

In einer besonders bevorzugten Ausgestaltung ist die Akkuzelle als Pouch-Zelle ausgebildet. Es hat sich als vorteilhaft herausgestellt, wenn der Akkupack eine Mehrzahl sandwichartig in Stapelrichtung gestapelter Pouch-Zellen aufweist. Es hat sich als vorteilhaft herausgestellt, wenn der Riegel und/oder das Federelement unmittelbar mit der Akkuzelle in Kontakt steht und/oder durch diese mechanisch betätigt wird.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1A: ein erstes bevorzugtes Ausführungsbeispiel eines erfindungsgemäßen Akkupacks mit einer mechanischen Verriegelung in einer Freigabestellung;
- Fig. 1B: das erste bevorzugte Ausführungsbeispiel des erfindungsgemäßen Akkupacks mit der mechanischen Verriegelung in einer Sperrstellung; und
- Fig. 2: eine elektrische Handwerkzeugmaschine des Standes der Technik.

### Ausführunasbeispiele:

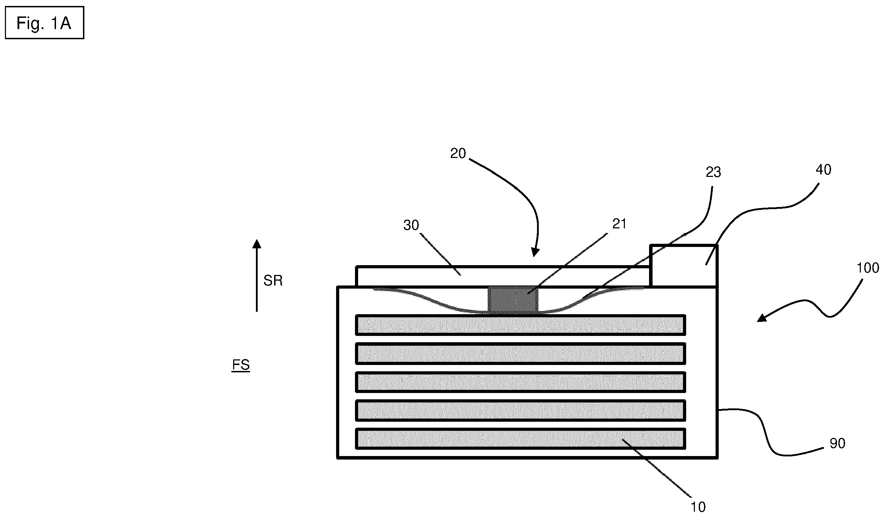

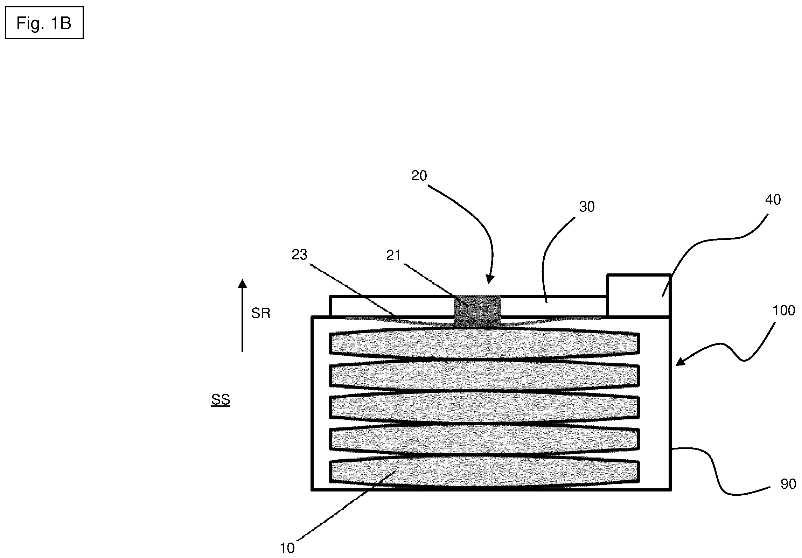

Ein bevorzugtes Ausführungsbeispiel eines erfindungsgemäßen Akkupacks 100 ist in Fig. 1 dargestellt. Der Akkupack 100 weist wenigstens eine Akkuzelle 10 auf, die innerhalb eines Gehäuses 90 des Akkupacks 100 angeordnet ist. Im vorliegend dargestellten Ausführungsbeispiel ist die Akkuzelle 10 als Pouch-Zelle ausgebildet. Genauer gesagt, sind innerhalb des Gehäuses 90 fünf sandwichartig in Stapelrichtung SR gestapelte und als Pouch-Zellen bereitgestellte Akkuzellen 10 angeordnet.

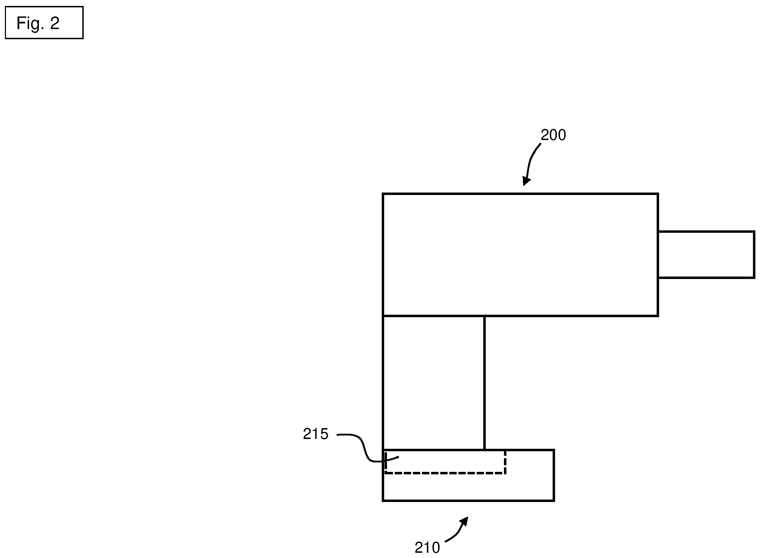

Der Akkupack 100 ist zur wiederlösbaren Aufnahme in einer Aufnahmebucht 210 einer elektrischen Handwerkzeugmaschine 200 (vgl. Fig. 2) ausgebildet, wobei dies durch eine am Gehäuse 90 angeordnete mechanische Schnittstelle 30 gewährleistet ist. Im Ausführungsbeispiel der Fig. 1 ist die mechanische Schnittstelle 30 beispielhaft als Anschlussschiene ausgebildet, mittels welcher der Akkupack 100 auf eine mit der Anschlussschiene korrespondierende Aufnahmeeinheit 215, die in der Aufnahmebucht 210 der elektrischen Handwerkzeugmaschine 200 angeordnet ist, aufgeschoben werden kann. Der Akkupack 100 weist ebenfalls eine elektrische Schnittstelle 40 in Form eines Kontaktblocks auf, über welchen der Akkupack 100 elektrisch mit der Handwerkzeugmaschine 200 verbunden werden kann um diese mit elektrischer Energie zu versorgen.

Erfindungsgemäß weist der Akkupack 100 eine mechanische Verriegelung 20 mit einer Freigabestellung FS (vgl. Fig. 1A) und einer Sperrstellung SS (vgl. Fig. 1B) auf. Die mechanische Verriegelung 20 ist ausgebildet in Sperrstellung SS die Aufnahme des Akkupacks 100 in der Aufnahmebucht 210 zu verhindern. Erfindungsgemäß wird die mechanische Verriegelung 20 durch eine Volumenzunahme der Akkuzellen 10 ausgelöst. Dies wird im Folgenden genauer erläutert.

Wie der Fig. 1A entnommen werden kann, weist die mechanische Verriegelung 20 einen Riegel 21 auf, der durch ein Federelement 23 in Form einer Blattfeder in die Freigabestellung FS vorgespannt ist. Die mechanische Verriegelung 20 ist hier beispielhaft unmittelbar an der mechanischen Schnittstelle 30 in Form der Anschlussschiene angeordnet. Die Anschlussschiene ist nicht durch den Riegel 21 blockiert, da sich der Riegel 21 vollständig (oder zumindest überwiegend) innerhalb des Gehäuse 90 des Akkupacks befindet. Das Federelement 23 in Form der Blattfeder drückt den Riegel 21 gegen die oberste Akkuzelle 10, die in normalem Zustand befindlich, d.h. nicht aufgeschwollen ist.

Im Zuge der Zellalterung kommt es zu einer Volumenzunahme der Akkuzellen 10, was in Fig. 1B verdeutlicht ist. Die Akkuzellen 10 sind in Stapelrichtung SR aufgebläht. Dadurch wird die Vorspannung des Federelements 23 überwunden, wodurch der Riegel 21 in Stapelrichtung SR in die als Anschlussschiene bereitgestellte mechanischen Schnittstelle 30 hineingedrückt wird. Die Anschlussschiene ist also durch den Riegel 21 blockiert, da sich der Riegel 21 vollständig (oder zumindest überwiegend) innerhalb der als Anschlussschiene bereitgestellten mechanischen Schnittstelle 30 befindet. Demgemäß kann der Akkupack 100 nicht mehr auf die mit der Anschlussschiene korrespondierende Aufnahmeeinheit 215, die in der Aufnahmebucht 210 der elektrischen Handwerkzeugmaschine 200 angeordnet ist, aufgeschoben werden. Vorteilhafterweise muss die mechanische Verriegelung 20 selbst nicht mit elektrischer Energie versorgt werden, wodurch eine erhöhte Betriebssicherheit des Akkupacks 100 erreicht wird.

### Bezuaszeichenliste

- 10: Akkuzelle
- 20: mechanische Verriegelung
- 21: Riegel
- 23: Federelement
- 30: mechanische Schnittstelle
- 40: elektrische Schnittstelle
- 90: Gehäuse

- 100: Akkupack
- 200: elektrische Handwerkzeugmaschine
- 210: Aufnahmebucht
- 215: Aufnahmeeinheit

- FS: Freigabestellung
- SS: Sperrstellung
- SR: Stapelrichtung

## Patentansprüche

1. Akkupack (100) der zur wiederlösbaren Aufnahme in einer Aufnahmebucht (210) einer elektrischen Handwerkzeugmaschine (200) und/oder eine Ladestation ausgebildet ist, wobei der Akkupack (100) wenigstens eine Akkuzelle (10) aufweist, die innerhalb eines Gehäuses (90) des Akkupacks (100) angeordnet ist,
**dadurch gekennzeichnet, dass** der Akkupack (100) eine mechanische Verriegelung (10) mit einer Freigabestellung (FS) und einer Sperrstellung (SS) aufweist, wobei die mechanische Verriegelung (10) ausgebildet ist in Sperrstellung (SS) die Aufnahme des Akkupacks (100) in der Aufnahmebucht (210) zu verhindern, und wobei die mechanische Verriegelung (10) durch eine Volumenzunahme der Akkuzelle (10) ausgelöst wird.

2. Akkupack (100) nach Anspruch 1,
**dadurch gekennzeichnet, dass** das Gehäuse (90) eine mechanische Schnittstelle (30) aufweist über welche eine Aufnahme des Akkupacks (100) in der Aufnahmebucht (210) erfolgen kann, wobei die mechanische Verriegelung an der mechanischen Schnittstelle (30) angeordnet ist.

3. Akkupack (100) nach Anspruch 1 oder 2,
**dadurch gekennzeichnet, dass** die mechanische Schnittstelle (30) als Anschlussschiene ausgebildet ist.

4. Akkupack (100) nach einem der vorangehenden Ansprüche,
**dadurch gekennzeichnet, dass** die mechanische Verriegelung (20) einen Riegel (21) aufweist, der durch ein Federelement (23) in die Freigabestellung (FS) vorgespannt ist.

5. Akkupack (100) nach Anspruch 4,
**dadurch gekennzeichnet, dass** das Federelement (23) derart angeordnet ist, dass eine Vorspannung des Federelements (23) durch die expandierende Akkuzelle (10) überwunden werden kann.

6. Akkupack (100) nach einem der vorangehenden Ansprüche,
**dadurch gekennzeichnet, dass** die mechanische Verriegelung (20) ein mechanisches Anzeigeelement, vorzugsweise in Form eines eingefärbten Materialabschnitts aufweist.

7. Akkupack (100) nach einem der vorangehenden Ansprüche,
**dadurch gekennzeichnet, dass** der Akkupack (100) eine Rastsperre aufweist, die ausgebildet ist, ein manuelles Betätigen der mechanischen Verriegelung (20) in die Freigabestellung (FS) zu verhindern.

8. Akkupack (100) nach einem der vorangehenden Ansprüche,
**dadurch gekennzeichnet, dass** der Akkupack (100) ein Rastverzögerungselement aufweist, das ausgebildet ist die mechanische Verriegelung (20), bei expandierter Akkuzelle (10), bis zur Entnahme des Akkupacks aus der Aufnahmebucht in Freigabestellung zu halten.

9. Akkupack (100) nach einem der vorangehenden Ansprüche,
**dadurch gekennzeichnet, dass** die mechanische Verriegelung (20) verschieden ist von einem etwaig am Akkupack (100) vorgesehenen manuellen Verriegelungsmechanismus.

10. Akkupack (100) nach einem der vorangehenden Ansprüche,
**dadurch gekennzeichnet, dass** die Akkuzelle (10) als Pouch-Zelle ausgebildet ist.
